# FASCICULE DE BREVET EUROPEEN

(11) **EP 0 810 273 B1**
(45) Date de publication et mention de la délivrance du brevet: **25.08.1999**
(21) Numéro de dépôt: 97401144.7
(22) Date de dépôt: 26.05.1997
(51) Int. Cl.: C09D 9/00

(54) **Composition décapante à base d'eau et d'anisole**
Abbeizmittel auf Basis von Wasser und Anisol
Paint removing composition based on water and anisole

(30) Priorité: 31.05.1996 FR 9606736
(43) Date de publication de la demande: 03.12.1997
(73) Titulaire: ELF ATOCHEM S.A., 92800 Puteaux, Hauts-de-Seine (FR)
(72) Inventeur: Lallier, Jean-Pierre, 92400 Courbevoie (FR)

(56) Documents cités:
- EP-A- 0 188 230
- EP-A- 0 573 339
- US-A- 5 232 515

## Description

La présente invention concerne une composition décapante de peintures, vernis ou laques recouvrant un substrat.

Les décapants pour peintures et vernis ou laques sont utilisés de deux façons : par dépôt ou par immersion. Les décapants appliqués par dépôt le sont généralement par brossage ou spray. Ils contiennent presque toujours un épaississant et sont utilisés à température ambiante (20°C). On les utilise pour des petits travaux ou pour des objets à décaper ne pouvant être immergés. Dans cette catégorie, entrent le décapage grand public, le décapage professionnel bâtiment et le décapage aéronautique. Les décapants par immersion utilisent soit des bains froids (souvent à base de chlorure de méthylène) ou soit des bains chauds (souvent à base de soude caustique). Ils sont surtout utilisés pour le décapage d'un nombre élevé de petites pièces (décapage industriel).

On connaît déjà de EP 0490 726 une composition décapante comprenant en volume de 1 à 20 % d'un solvant aprotique polaire, tel que le diméthylsulfoxyde (DMSO) ou la N-méthylpyrrolidinone (NMP), et de 99 à 80 % d'un éther tel que le tétrahydrofuranne.

Il est déjà connu de EP 0573 339 une composition décapante comprenant en volume de 1 à 20 % d'un solvant aprotique polaire comme le DMSO et NMP, et de 99 à 80 % d'un éther présentant un point éclair supérieur à 0°C, un volume molaire inférieur à 160 et une molécule pourvue d'un ou plusieurs groupes méthoxy; cet éther peut être notamment l'anisole.

Ces deux compositions décapantes ci-dessus, bien que très efficaces dans leur action décapante présentent toutefois l'inconvénient d'être coûteuses.

Par ailleurs, WO 93/07227 divulgue l'addition d'eau à des solvants ou à des mélanges de solvants estimés efficaces en décapage peinture. Ce document décrit des compositions contenant 1°/ au moins un solvant organique choisi parmi l'acétate d'éthyle, la méthyl éthyl cétone, le toluène, 2°/ de l'eau, 3°/ au moins un épaississant et 4°/ au moins un surfactant.

L'efficacité de ces compositions est simplement proportionnelle à la quantité de solvant organique utilisée et de toute façon, inférieure à l'efficacité du solvant pur.

Ainsi, il existe un besoin dans l'industrie des décapants de trouver d'autres compositions dont le coût soit moindre, mais qui soient au moins aussi efficace que les compositions de l'art antérieur.

La Demanderesse a trouvé que des compositions aqueuses du type eau-anisole avaient une efficacité en décapage peinture plus élevée que celle de l'anisole utilisée sans eau.

Plus précisément la présente invention réside dans une composition décapante de peintures, vernis ou laques, caractérisée en ce qu'elle comporte au moins les deux constituants suivants :
1/ de l'eau,
2/ de l'anisole.
Cette invention peut être utilisée dans les différents secteurs du décapage des peintures :
- décapage grand public,
- décapage professionnel bâtiment,
- décapage industriel,
- décapage aéronautique.

Avantageusement, les constituants sont présents dans les proportions suivantes:
1/ l'eau de 10 à 90 parties en poids,
2/ l'anisole de 10 à 90 parties en poids.

De préférence, les constituants sont présents dans les proportions suivantes:
1/ l'eau de 70 à 80 parties en poids,
2/ l'anisole de 20 à 30 parties en poids.

De préférence, la composition selon l'invention contient un ou plusieurs autres constituants choisis parmi un activateur, un épaississant, un inhibiteur de corrosion.

L'activateur peut être par exemple choisi parmi la monoéthanolamine, l'ammoniaque à 30% dans l'eau, l'acide formique.

L'épaississant peut être par exemple un composé cellulosique ou polyacrylique.

L'inhibiteur de corrosion peut être par exemple le benzoate de sodium.

En plus de la description précédente, l'invention sera mieux comprise à l'aide des exemples suivants.

Dans tous ces exemples, sauf si autrement indiqué, la teneur de chaque constituant des compositions est indiquée en pourcentage en poids sur la base du poids total de la composition.

### Exemple 1 : binaire eau-anisole

Pour l'utilisation des compositions dans le secteur industriel, on a utilisé des peintures de l'industrie automobile. Les peintures sont des laques polyester Blanc Glacier 389 d'HERBERTS, fournies par la société ETALON (France). L'épaisseur du revêtement est de 35 à 45 µm. Les plaques métalliques utilisées sont en acier phosphaté et ont une surface recouverte rectangulaire de 90 x 190 mm. Les performances sur ces plaques sont généralisables à d'autres peintures plus faciles à décaper que les peintures polyester, ce qui est généralement le cas pour les glycérophtaliques, les alkydes et les acryliques. Les résultats figurent dans le tableau I suivant:

**TABLEAU I**

| Compositions¹ | Temps de décapage² (secondes) |
|---|---|
| eau/anisole (0/100)* | 410 |
| eau/anisole (25/75) | 284 |
| eau/anisole (50/50) | 264 |
| eau/anisole (75/25) | 245 |
| eau/anisole (100/0)* | pas de décapage |

| | |
|---|---|
| 1 - Les compositions sont homogénéisées sous forme d'émulsions. | |
| 2 - Obtenus par imprégnation d'un coton hydrophile à température de 20°C. | |
| *- Essais comparatifs. | |

### Exemple 2 : Microémulsions

Les plaques, les peintures ainsi que leur dépôt sont identiques à ceux de l'exemple 1.
Les compositions eau-anisole peuvent être formulées en émulsions épaissies ou en microémulsions épaissie. On a préparé la formulation suivante, les constituants étant en des quantités définies en parties en poids:
- eau 50,6
- anisole 17
- diacétone-alcool 18
- Sunaptol 16 7
- dodécylsulfate de sodium 7
- Méthocell 2
Le diacétone-alcool facilite l'obtention d'une microémulsion ainsi que le mélange de Sunaptol 16 ( tensioactif éthoxylé à 16 oxyde d'éthylène, commercialisé par la société I.C.I.) et de dodécylsulfate, autre tensioactif.
Le Méthocell est l'épaississant.

Cette formulation s'est avérée être aussi efficace par son temps de décapage de 500 secondes à 20°C, qu'un mélange comparatif Diméthylsulfoxyde /anisole/Méthocell (30/70/2 parties en poids) dans le même test de décapage des plaques rapporté à l'exemple 1.

### Exemple 3 : Emulsions

En utilisant du Métox 15 OE( Métiloil éthoxylé à 15 motifs d'oxyde d'éthylène commercialisé par la société ELF ATOCHEM), on a préparé la formulation suivante, les constituants étant en des quantités définies en parties en poids:
- eau 50
- anisole 47,5
- Métox 15 OE 2,5
Les performances obtenues à 20°C, sont identiques à celles obtenues par la microémulsion préparée sans Méthocell mais pour le reste avec les mêmes quantités de constituants que l'exemple 2, soit un temps de décapage de 600 secondes.

## Revendications

1. Composition décapante de peintures, vernis ou laques, caractérisée en ce qu'elle comporte, sous forme d'une émulsion ou d'une microémulsion, au moins les deux constituants suivants :
1/ de l'eau,
2/ de l'anisole.

2. Composition selon la revendication 1, caractérisée en ce que les constituants sont présents dans les proportions suivantes :
1/ l'eau de 10 à 90 parties en poids,
2/ l'anisole de 10 a 90 parties en poids.

3. Composition selon la revendication 2, caractérisée en ce que les constituants sont présents dans les proportions suivantes :
1/ l'eau de 70 à 80 parties en poids,
2/ l'anisole de 20 à 30 parties en poids.

4. Composition selon l'une des revendications 1 à 3, caractérisée en ce qu'elle contient un ou plusieurs autres constituants choisis parmi un activateur, un épaississant, un inhibiteur de corrosion.

## Patentansprüche

1. Zusammensetzung zum Abbeizen von Farben, Firnissen oder Lacken, dadurch gekennzeichnet, daß sie, in Form einer Emulsion oder Mikroemulsion, mindestens die beiden folgenden Bestandteile aufweist:
1/ Wasser
2/ Anisol.

2. Zusammensetzung nach Anspruch 1, dadurch gekennzeichnet, daß die Bestandteile in folgenden Verhältnissen vorhanden sind:
1/ Wasser 10 bis 90 Gewichtsteilen
2/ Anisol 10 bis 90 Gewichtsteilen.

3. Zusammensetzung nach Anspruch 2, dadurch gekennzeichnet, daß die Bestandteile in folgenden Verhältnissen vorhanden sind:
1/ Wasser 70 bis 80 Gewichtsteilen
2/ Anisol 20 bis 30 Gewichtsteilen.

4. Zusammensetzung nach einem der Ansprüche 1 bis 3, dadurch gekennzeichnet, daß sie einen oder mehrere weitere Bestandteile ausgewählt unter einem Aktivierungsmittel, einem Verdickungsmittel und einem Korrosionsinhibitor enthält.

## Claims

1. Stripping composition for paints, varnishes or lacquers, characterized in that it comprises, in the form of an emulsion or a microemulsion, at least the following two constituents:
1) water,
2) anisole.

2. Composition according to Claim 1, characterized in that the constituents are present in the following proportions:
1) water from 10 to 90 parts by weight,
2) anisole from 10 to 90 parts by weight.

3. Composition according to Claim 2, characterized in that the constituents are present in the following proportions:
1) water from 70 to 80 parts by weight,
2) anisole from 20 to 30 parts by weight.

4. Composition according to one of Claims 1 to 3, characterized in that it comprises one or more other constituents selected from an activator, a thickener and a corrosion inhibitor.
